# EUROPEAN PATENT SPECIFICATION

(11) **EP 1 575 788 B1**
(45) Date of publication and mention of the grant of the patent: **27.02.2008**
(21) Application number: 02808283.2
(22) Date of filing: 20.12.2002
(51) Int. Cl.: B60B 33/02

(54) **SUPPORT STRUCTURE FOR SWIVEL WHEEL WITH BRAKE ASSEMBLY**
STÜTZSTRUKTUR FÜR SCHWENKRAD MIT BREMSSATZ
STRUCTURE DE SOUTIEN POUR ROUE A PIVOT AVEC ENSEMBLE FREIN

(43) Date of publication of application: 21.09.2005
(73) Proprietor: Tellure Rôta S.p.A., 41043 Formigine (IT)
(72) Inventor: ZANNI, Emilio, I-41043 Formigine (IT)
(74) Representative: Gerbino, Angelo
(86) International application number: PCT/IT2002/000816
(87) International publication number: WO 2004/056584

(56) References cited:
- EP-A- 0 358 943
- EP-A- 0 803 382
- DE-A- 2 260 843
- DE-A- 2 459 580
- DE-U- 1 932 802
- GB-A- 2 047 364
- US-A- 4 835 815

## Description

### DESCRIPTION

The present invention relates to a support structure for a swivel wheel with brake assembly.

The support structure for swivel wheel in question is intended to be used advantageously for the movement of mobile structures such as, for example; trolleys, work platforms, movable scaffolding, refuse bins or the like.

Below the term "swivel" will be used to indicate the possibility of the wheel being able to rotate freely, following a steering action, about a vertical axis.

Some known solutions of support structures, described for example in the patents EP 358,943 and DE 2459580, comprise a mounting plate intended to be fixed to the body of a movable structure such as a trolley and a fork element which is provided with a base, facing the mounting plate, and with two lateral arms which extend downwards and accommodate a pin for rotatably supporting the wheel about its substantially horizontal axis of rotation.

The base and the mounting plate have, arranged between them, sliding means designed to permit a relative rotation of these two elements so as to allow, as a result, swivelling of the wheel about the abovementioned vertical axis.

The support structure also has, associated with it, a brake assembly which has the function of locking both rotation of the wheel about its horizontal axis of rotation and swivelling of the wheel about the vertical axis.

Traditionally, these functions are performed by a resilient, steel, shaped element in the form of a plate, provided with first and second engaging elements able to lock respectively the wheel and the sliding means as a result of the action of an actuating pedal and a release pedal.

In these support structures of the known type, a large number of components are therefore envisaged, said components generally including at least: a supporting reinforcement in certain cases incorporated as one piece in the fork element; a plate-like resilient element; an actuating pedal and a release pedal or element.

The support structure solution described in the German patent DE 2459580 has a fork element with an extension for supporting the plate-like element, in which a guide opening is formed for insertion of the release pedal.

This solution poses numerous difficulties as regards assembly and, owing to the limited amount of operating space available, results in complex and laborious operations.

Moreover, this same solution has proved in practice to be of limited reliability in particular owing to the fact that the opening in the fork element is prone to accumulate dirt, adversely affecting operation of the brake.

The support structure solution described in European patent EP 358943, although improving the performance of the solution illustrated in the patent DE 2459580, also suffers, like the latter, from the drawback that there is an excessively large number of components. Also DE 2260843 suffers from the drawback of an excessively large number of components.

This fact has a negative impact on production costs, on the assembly time and on the maintenance time and costs.

The main object of the present invention is therefore that of overcoming the drawbacks of the solutions of the known type mentioned above, by providing a support structure for a swivel wheel with brake assembly, which is constructionally simple and inexpensive to realize and operationally entirely reliable.

A further object of the present invention is that of providing a support structure for a swivel wheel with brake assembly, which consists of a small number of elements, is simple and inexpensive to manufacture, is highly practical as regards assembly and disassembly operations and proves to operationally reliable also under high load conditions.

These and other objects are all achieved by the support structure according to the present invention, which is able to support rotatably a wheel about its central axis of rotation and is provided with a mounting plate intended to be fixed to the body of a movable structure and rotatably connected to the support structure about a swivelling axis by means of sliding means. The support structure comprises according to the invention a brake assembly which is mechanically and operationally associated with the wheel and able to lock the wheel and the mounting plate so as to prevent rotation of the said wheel about the central axis and the swivelling axis, respectively.

According to the invention, the support structure is characterized in that it comprises a shaped element which is mounted pivotably on the support structure about a pivoting axis in the manner of rocker arm and is provided with at least one first engaging element and at least one second engaging element which are able to be displaced as a result of pivoting of the shaped element between an operative position, where they are biased so as to grip respectively against the wheel and the mounting plate in order to prevent rotation of the wheel respectively about the central axis and the swivelling axis, and a rest position, where they do not interfere with the wheel and the mounting plate, the shaped element being provided with a first portion and a second portion, which are connected together as one piece and comprise respectively first and second actuating means, so that, by operating the first actuating means of the first portion, the shaped element forcibly brings the first engaging element and the second engaging element into the operative position and the second portion assumes a locked position where it engages in a retaining manner with the support structure, keeping the first engaging element and the second engaging element stably in the operative position, and by operating the second actuating means of the second portion, the shaped element resiliently brings the first engaging element and the second engaging element back into the rest position and the second portion assumes a released position, where it is disengaged from the support structure, keeping the first engaging element and the second engaging element stably in the rest position.

The technical features of the invention, in accordance with the abovementioned objects, may be determined from the contents of the claims indicated below and the advantages thereof will emerge more clearly from the detailed description which follows, with reference to the accompanying drawings, which show some purely exemplary and non-limiting embodiments in which:
- Figure 1 shows schematically a partially sectioned side view of the support structure according to the invention with some parts removed so that other parts may be more clearly visible and with the brake assembly in a locked configuration;

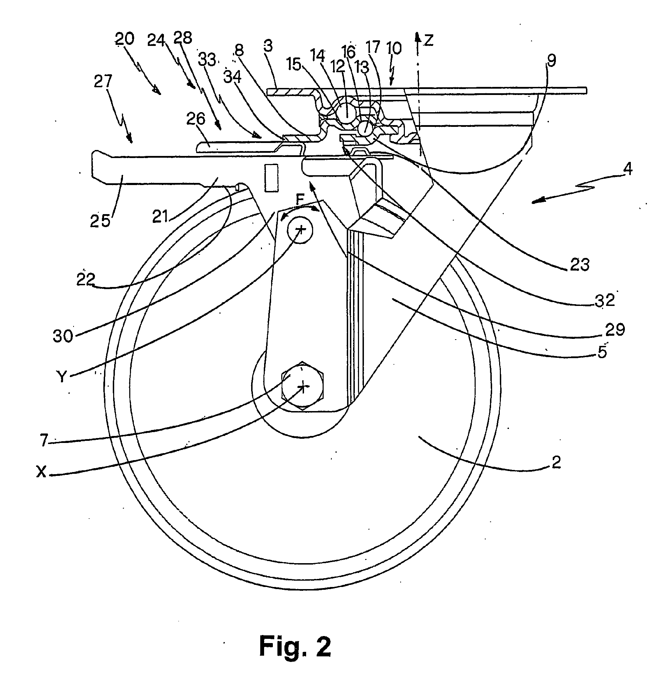

- Figure 2 shows schematically a side view similar to Figure 1 with the brake assembly in a released configuration;

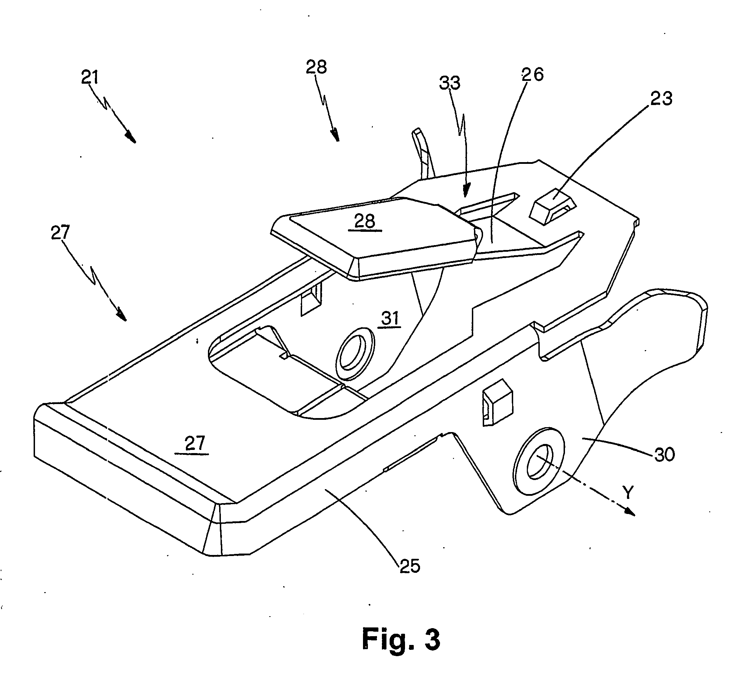

- Figure 3 shows an overall perspective view of a detail of the structure in question relating to a shaped element of the brake assembly;

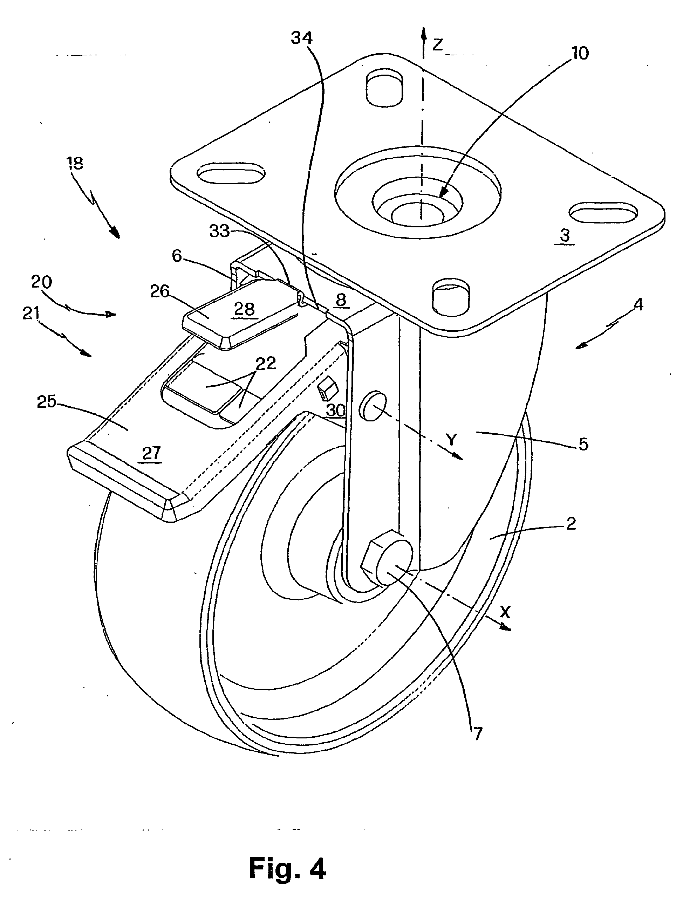

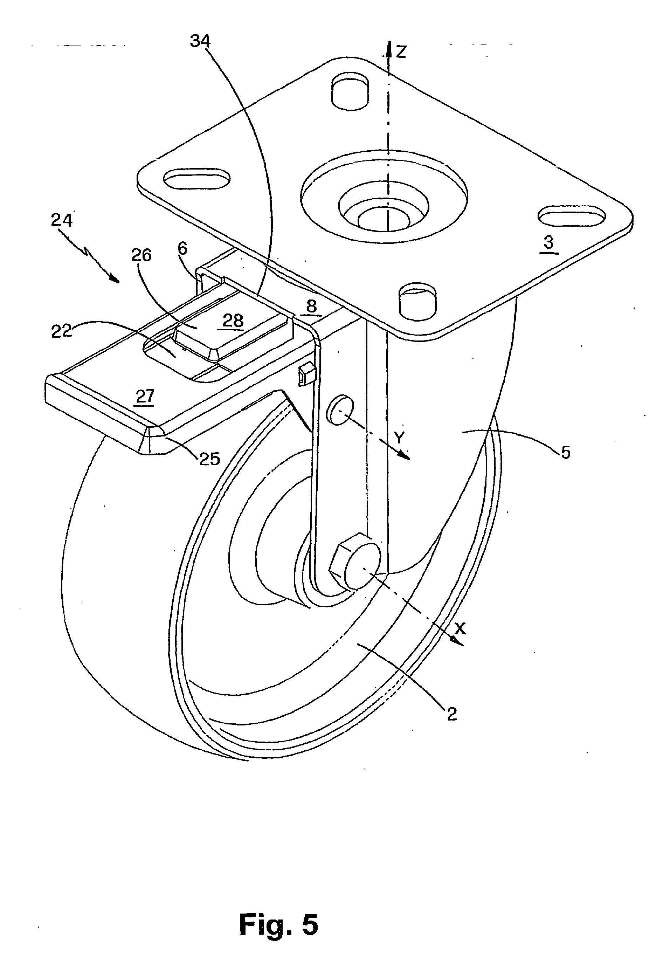

- Figures 4 and 5 show a rear perspective view of the support structure respectively in the configuration according to Figure 1 and the configuration according to Figure 2.

In accordance with the figures of the accompanying drawings, 1 and 2 denote in their entirety, respectively, the support structure according to the present invention and a swivel wheel mounted on the support structure 1.

The support structure 1 comprises a mounting plate 3 intended to be fixed to the body of a movable structure, such as for example a trolley, a work platform, a movable scaffolding, a refuse bin or the like.

The support structure 1 comprises moreover traditionally a fork element 4 rotatable with respect to the mounting plate 3 about a vertical swivelling axis Z, as will be clearly described below, and preferably formed by two lateral arms 5 and 6 directed downwards and having mounted at the bottom a pin 7 for rotationally supporting the wheel 1 about its central axis X.

The two lateral arms 5 and 6 are connected together at the top by a common upper base 8 situated in a position underneath the mounting plate 3. The same base 8 is moreover substantially located between the mounting plate 3 and an annular element 9 which is rigidly fixed underneath a tubular lug 10 of the said mounting plate 3 by means of clinching of a peripheral edge of this latter plate 3.

Alternatively, the mounting plate 3 and the annular element 9 may be formed as one piece.

In greater detail, the base 8 and the mounting plate 3 are rotatably connected together about the vertical swivelling axis Z by means of sliding means.

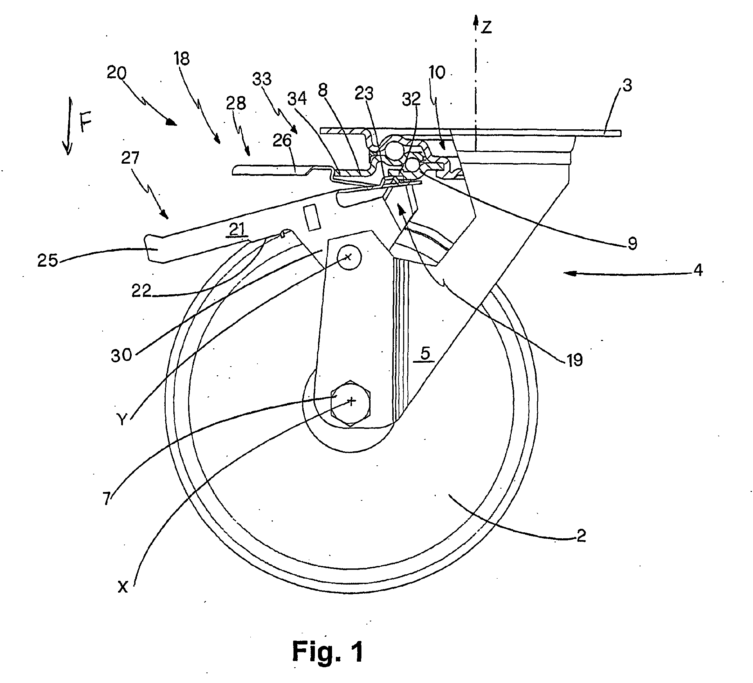

The latter, in accordance with a preferred embodiment of the present invention, comprise an upper ring of spheres 12 and a lower ring of spheres 13 which are located between rolling tracks 14, 15 and 16, 17 defined respectively between the mounting plate 3 and the upper base 8 of the support structure 1 and between the upper base 8 and the annular element 9, as indicated in Figure 1.

The fork element 4 and the mounting plate 3 therefore define, between them, a bearing arrangement comprising a double ring of spheres able to ensure the rotation of the said fork element 4 with respect to the mounting plate 3 so as to allow swivelling of the wheel 2 about the vertical axis Z.

The support structure 1 comprises moreover, according to the invention, a brake assembly 20 which can be operated externally so as to lock both rotation of the wheel 2 about its horizontal central axis X relative to the fork element 4 and lock rotation of the said fork element 4 - and the wheel 2 together therewith - about the vertical swivelling axis Z relative to the mounting plate 3.

The inventive idea lies in particular in the fact that the brake assembly 20 comprises a shaped element 21 which is mounted pivotably in the manner of a rocker arm on the support structure 1 and is provided with a first engaging element 22 and a second engaging element 23. These elements 22, 23 are able to move, as a result of pivoting of the shaped element 21, between an operative position. 18, where they are biased so as to grip respectively against the wheel 2 and the mounting plate 3 in order to prevent rotation of the wheel 2 about the axis X and rotation of the fork 4 about the axis Z, and a rest position 24, where 22, 23 do not interfere with the wheel 2 and with the mounting plate 3.

The shaped element 21 is provided with a first portion 25 and a second portion 26 which are connected together as one piece and operationally and mechanically associated respectively with first and second actuating means, the first means, indicated by 27, being intended to bring the engaging elements 22, 23 into the operative position 18, and the second means, indicated by 28, being intended to bring into the same engaging elements 22, 23 into the rest position 24. In accordance with a preferred solution of the present invention, the first and the second portion 25 and 26 form the abovementioned first and second actuating means 27 and 28 by means of two respective sections extending in the manner of actuating pedals at least partially outside the overall dimensions of the support structure 1.

operationally speaking, when the first section 27 of the first portion 25 is pressed by a foot, total locking of the wheel 2 occurs.

In fact, in so doing, the shaped element 21 brings the two engaging elements 22 and 23 into the operative position 18, while at the same time the second portion 26 assumes a locking position 19, where it engages in a retaining manner with the support structure 1 so as to keep the two engaging elements 22 and 23 stably in the aforementioned operative position 18.

When it is required to release the movements of the wheel 2, the second section 28 of the second portion 26 is operated, once again preferably by means of the pressing action of a foot, and in this way the second portion 26 is disengaged from the support structure 1, assuming a released position 29 and allowing the resilient return movement of the two engaging elements 22 and 23 into the rest position 24.

The shaped element 21 is connected to the support structure 1 by means of two lateral flanges 30, 31 extending downwards from the first portion 25 and pivotably mounted on the two lateral arms 5, 6 about a pivoting axis Y. In this way, the shaped element is able to rotate in the direction indicated by the arrow F in Figure 1 as a result of the action of a foot on one of its two sections 27, 28. The abovementioned rotation about the pivoting axis Y occurs preferably parallel to the axis of rotation of the wheel 2.

The two engaging elements 22 and 23 are arranged on opposite sides of the shaped element 21 relative to the abovementioned pivoting axis Y. In this way, as a result of lowering of the first engaging element 22 onto the wheel 2, raising of the second engaging element 23 towards the mounting plate 3 simultaneously occurs.

In accordance with a preferred embodiment of the present invention, the annular element 9 is provided at the bottom with a toothed edge 32 able to co-operate with the second engaging element 23 so as to lock/release the rotation of the fork element 4 relative to the mounting plate 3.

The second engaging element 23 is therefore advantageously formed by a single tooth extending in a projecting manner from the end of the first portion 25 connected to the second portion 26. The shape of the tooth is counter-shaped with respect to the cavities of the toothed edge 32 so as to be able to be inserted easily inside them in a sealed manner.

Alternatively, in accordance with a further possible embodiment of the present invention, the second engaging element 23 may act directly on the sliding means 11.

In turn, the first engaging element 22, intended to act advantageously against the peripheral surface of the wheel 2 is preferably formed by one or more lugs arranged underneath the first portion 25.

The form and the number of the lugs may depend also on the form and the material with which the wheel 2 is made.

In order to retain the shaped element 21 in the locking position 19, fastening means 33 are suitably provided, said means being mechanically associated with the second portion 26 and capable of engaging/disengaging with/from an opposing profiled part 34 of the support structure 1.

In accordance with the preferred example of embodiment illustrated in the accompanying figures, the fastening means 33 are formed by means of a step-like fold which is shaped so as to engage/disengage by means of friction with/from a corresponding edge of the opposing profiled part 34.

The shaped element 21 is composed of a single-piece steel plate which is obtained by means of a pressing process involving several successive stages and by means of tempering and annealing processes able to ensure the necessary resilience of the two portions 25, 26.

In fact, these portions 25 and 26 are connected together continuously by means of a common terminal part 35 and are kept resiliently compressed on each other by the support structure 1. The second portion 26 is formed inside the first portion 25 and partially faces the latter.

The resilient compression of the two portions 25, 26 allows the return movement of the engaging elements 22, 23 from the operative position 18 into the rest position 24. The support structure 1 acts on the shaped element 21 on the one hand by means of engagement of the flanges 30, 31 of the first portion 25 with the two lateral arms 5, 6 about the pivoting axis Y and on the other hand by means of the interaction of the opposing profiled part 4 with the second portion 26.

During use, the brake 20 is operated by pressing with a foot on the first section 27 of the shaped element 21 so as to bring the engaging elements 22, 23 into the operative position 18 with the second portion 26 in the locked position 19.

Operation of the brake 20 causes locking of the wheel 2 both with respect to rotation thereof about the horizontal axis X, as a result of the action of the first engaging element 22 against the external surface of the wheel, and as regards rotation thereof about the swivel axis Z owing to the action of the second engaging element 23 against the toothed edge 32 of the annular element 9.

The main advantage of the support structure 1 according to the present invention consists in the low production costs, which it has been possible to limit in particular owing to the small number of components used for manufacture of the brake 20.

The latter is in fact essentially composed of only the shaped element 21 which incorporates within it, as one part, the conventional actuating pedal and the conventional release pedal by means of its two portions, respectively corresponding to the first section 27 and the second section 28.

The constructional simplicity also obviously has a favourable impact on the assembly costs of the support structure 1.

The invention thus conceived therefore achieves the predefined objects.

Obviously it may also assume, in its practical embodiment, forms and configurations different from that illustrated above without thereby departing from the present scope of protection. Moreover, all the details may be replaced by technically equivalent elements and the forms, dimensions and materials used may of any kind according to requirements.

## Claims

1. Support structure for a swivel wheel, which is able to support rotatably a wheel (2) about its central axis of rotation (X) and is provided with a mounting plate (3) intended to be fixed to the body of a movable structure and rotatably connected to said support structure (1) about a swivelling axis (Z) by means of sliding means said support structure (1) comprising a brake assembly (20) which is mechanically and operationally associated with said wheel (2) and is able to lock the wheel (2) and the mounting plate (3) so as to prevent rotation of said wheel (2) about said central axis (X) and said swivelling axis (Z), respectively, said brake assembly (20) comprises a shaped element (21) which is mounted pivotably on said support structure (1) in the manner of rocker arm about a pivoting axis (Y) and is provided with at least one first engaging element (22) and at least one second engaging element (23) which are able to be displaced, as a result of pivoting of said shaped element (21), between an operative position (18), where they are biased so as to grip respectively against said wheel (2) and said mounting plate (3) in order to prevent rotation of said wheel (2) respectively about said central axis (X) and said swivelling axis (Z), and a rest position (24), where they do not interfere with said wheel (2) and with said mounting plate (3) , **characterised in that** said shaped element (21) is provided with a first portion (25) and a second portion (26), which are connected together continuously as one piece by means of a return fold and are arranged so as to be at least partly substantially facing each other, wherein said first portion (25) and second portion (26) comprise respectively first and second actuating means (27, 28), so that, by operating the first actuating means (27) of the first portion (23), said shaped element (21) forcibly brings said first engaging element (22) and said second engaging element (23) into said operative position (19) and said second portion (26) assumes a locked position (19) where it engages in a retaining manner with said support structure (1), keeping said first engaging element (22) and said second engaging element (23) stably in said operative position (18), and by operating the second actuating means (28) of the second portion (26), said shaped element (21) resiliently brings said first engaging element (22) and said second engaging element (23) back into said rest position (24) and said second portion (26) assumes a released position (29), where it is disengaged from said support structure (1), keeping said first engaging element (22) and said second engaging element (23) stably in said rest position.

2. Support structure according to Claim 1, **characterized in that** said first and said second actuating means essentially consist, respectively, of a first section (27) of said first portion (25) and a second section (28) of said second portion (26) extending in the manner of actuating pedals at least partially outside the overall dimensions of said support structure (1).

3. Support structure according to Claim 1, **characterized in that** said first engaging element (22) and said second engaging element (23) are arranged on opposite sides of said shaped element (21) with respect to the pivoting axis (Y) about which said shaped element (21) is capable of rotating on the support structure (1).

4. Support structure according to Claim 1, **characterized in that** said shaped element (21) is mounted pivotably on said support structure (1) about a pivoting axis (Y) substantially parallel to the central axis (X) of said wheel (2).

5. Support structure according to Claim 1, **characterized in that** said shaped element (21) is connected pivotably on said support structure (1) about a pivoting axis (Y) by means of its first portion (25).

6. Support structure according to Claim 1, **characterized in that** said second portion (26) is provided with fastening means (33) intended to engage/disengage with/from an opposing profiled part (34) of said support structure (1).

7. Support structure according to Claim 6, **characterized in that** said fastening means (33) are formed by means of a step-like fold which is able to engage/disengage with/from a corresponding edge of said opposing profiled part (34).

8. Support structure according to Claim 1, **characterized in that** said first portion (25) and said second portion (26) are kept resiliently compressed by said support structure (1).

9. Support structure according to Claims 5, 6, **characterized in that** said first portion (25) and said second portion (26) are kept resiliently compressed by means of the connection of said first portion. (25) to said support structure (1) about said pivoting axis (Y) and the action of said opposing profiled part (34) on said second portion (26).

10. Support structure according to Claim 2, **characterized in that** a compressive action on the first section (27) of said first portion (25) causes lowering of said first portion (25) and raising of said second portion (26).

11. Support structure according to Claim 1, **characterized in that** said mounting plate (3) is rigidly connected to an annular element (9) provided with a toothed edge (32) able to cooperate with said second engaging element (23).

12. Support structure according to Claim 11, **characterized in that** said sliding means (11) comprise at least one upper ring of spheres (12) and at least one lower ring of spheres (13) located between rolling tracks (14, 15, 16, 17) defined respectively between the mounting plate (3) and an upper base (8) of the support structure (1) and between said base (8) and said annular element (9).

13. Support structure according to Claim 1, **characterized in that** said first engaging element (22) consists of a toothing or one or more lugs provided underneath said first portion (25).

14. Support structure according to Claim 1, **characterized in that** said shaped element (21) consists of a pressed steel plate which has undergone tempering and annealing processes in order to ensure the necessary resilience of the two portions (25, 26).

15. Support structure according to Claim 1, **characterized in that** said second engaging element (23) acts on said sliding means (11) so as to prevent rotation of said wheel (2) about said swivelling axis (Z).

## Patentansprüche

1. Stützstruktur für ein Schwenkrad, die in der Lage ist, ein Rad (2) drehbar um seine zentrale Rotationsachse (X) zu stützen, und mit einer Montageplatte (3) versehen ist, die dafür vorgesehen ist, am Körper einer beweglichen Struktur befestigt zu werden, und mit der Stützstruktur (1) drehbar um eine Schwenk-achse (Z) mittels eines Schiebemittels verbunden ist, wobei die Stützstruktur (1) eine Bremsanordnung (20) umfasst, die mechanisch und funktions - bzw. betriebsfähig mit dem Rad (2) verbunden und in der Lage ist, das Rad (2) und die Montageplatte (3) zu verriegeln, um eine Drehung des Rades (2) um die zentrale Achse (X) und die Schwenkachse (Z) zu verhindern, wobei die Bremsanordnung (20) ein geformtes Element (21) umfasst, das an der Stütz-struktur (1) in der Art eines Kipphebels um eine Schwenkachse (Y) schwenk-bar angebracht und mit wenigstens einem ersten Eingriffselement (22) und mit wenigstens einem zweiten Eingriffselement (23) versehen ist, die in der Lage sind, versetzt zu werden als Folge des Schwenkens des geformten Elements (21) zwischen einer Betriebsposition (18), in denen sie vorgespannt sind, um an dem Rad (2) bzw. der Montageplatte (3) anzugreifen, um eine Drehung des Rades (2) um seine zentrale Achse (X) bzw. seine Schwenkwachse (Z) zu verhindern, und einer Ruheposition (24) in der sie das Rad (2) und die Monta-geplatte (3) nicht beeinträchtigen, **dadurch gekennzeichnet, dass** das geformte Element mit einem ersten Abschnitt (25) und einem zweiten Abschnitt (26) versehen ist, die durchgehend als ein Stück miteinander verbunden sind mit-tels einer Rückfaltung und die so angordnet sind, dass sie sich wenigstens teilweise im Wesentlichen gegenüberstehen, wobei der erste Abschnitt (25) und der zweite Abschnitt (26) jeweils erste und zweite Betätigungsmittel (27, 28) umfassen, so dass durch Bedienen des ersten Betätigungsmittels (27) des ersten Abschnitts (23) das geformte Element (21) das erste Eingriffselement (22) und das zweite Eingriffselement (23) zwangsweise in die Betriebsposition (19) bringt und der zweite Abschnitt (26) eine verriegelte Position (19) an-nimmt, in der er in zurückhaltender Weise in die Stützstruktur (1) eingreift, wo-durch das erste Eingriffselement (22) und das zweite Eingriffselement (23) stabil in der Betriebsposition (18) gehalten werden, und durch Bedienen des zweiten Betätigungsmittels (28) des zweiten Abschnitts (26) das geformte E-lement (21) das erste Eingriffselement (22) und das zweite Eingriffselement (23) elastisch zurück in die Ruheposition (24) bringt und der zweite Abschnitt (26) eine gelöste Position (29) einnimmt, in der er von der Stützstruktur (1) ge-löst ist, wodurch das erste Eingriffselement (22) und das zweite Eingriffsele-ment (23) stabil in der Ruheposition gehalten werden.

2. Stützstruktur nach Anspruch 1, **dadurch gekennzeichnet, dass** das erste und das zweite Betätigungsmittel im Wesentlichen jeweils aus einem ersten Teil (27) des ersten Abschnitts (25) und einem zweiten Teil (28) des zweiten Ab-schnitts (26) besteht, die sich in der Weise von Betätigungspedalen wenigs-tens teilweise außerhalb der Gesamtabmessungen der Stützstruktur (1) erstrecken.

3. Stützstruktur nach Anspruch 1, **dadurch gekennzeichnet, dass** das erste Eingriffselement (22) und das zweite Eingriffselement (23) auf entgegengesetzten Seiten des geformten Elements (21) in Bezug auf die Schwenkachse (Y) angeordnet sind, um die das geformte Element (21) in der Lage ist, sich an der Stützstruktur (1) zu drehen.

4. Stützstruktur nach Anspruch 1, **dadurch gekennzeichnet, dass** das geformte Element (21) an der Stützstruktur (1) um eine Schwenkachse (Y) schwenkbar angebracht ist, die im Wesentlichen zur zentralen Achse (X) des Rades (2) parallel ist.

5. Stützstruktur nach Anspruch 1, **dadurch gekennzeichnet, dass** das geformte Element (21) an der Stützstruktur (1) um eine Schwenkachse (Y) schwenkbar mittels ihres ersten Abschnitts (25) verbunden ist.

6. Stützstruktur nach Anspruch 1, **dadurch gekennzeichnet, dass** der zweite Abschnitt (26) mit Befestigungsmitteln (33) versehen ist, die dafür vorgesehen sind, in ein gegenüberliegendes Profilteil (34) der Stützstruktur (1) einzugrei-fen/sich davon zu lösen.

7. Stützstruktur nach Anspruch 6, **dadurch gekennzeichnet, dass** die Befestigungsmittel (33) mittels einer stufenartigen Faltung ausgebildet sind, die in der Lage ist, in eine entsprechende Kante des gegenüberliegenden Profilteils (34) einzugreifen/sich davon zu lösen.

8. Stützstruktur nach Anspruch 1, **dadurch gekennzeichnet, dass** der erste Abschnitt (25) und der zweite Abschnitt (26) durch die Stützstruktur (1) elastisch zusammengepresst bzw. - gedrückt gehalten werden.

9. Stützstruktur nach den Ansprüchen 5, 6, **dadurch gekennzeichnet, dass** der erste Abschnitt (25) und der zweite Abschnitt (26) mittels der Verbindung des ersten Abschnitts (25) mit der Stützstruktur (1) um die Schwenkachse (Y) und die Wirkung des gegenüberliegenden Profilteils (34) am zweiten Abschnitt (26) elastisch zusammengepresst bzw -gedrückt gehalten werden.

10. Stützstruktur nach Anspruch 2, **dadurch gekennzeichnet, dass** eine Druckwirkung auf den ersten Teil (27) des ersten Abschnitts (25) ein Absenken des ersten Abschnitts (25) und ein Anheben des zweiten Abschnitts (26) bewirkt.

11. Stützstruktur nach Anspruch 1, **dadurch gekennzeichnet, dass** die Montageplatte (3) starr mit einem ringförmigen Element (9) verbunden ist, das mit einer gezahnten Kante (32) versehen ist, die in der Lage ist, mit dem zweiten Eingriffselement (23) zusammenzuwirken.

12. Stützstruktur nach Anspruch 11, **dadurch gekennzeichnet, dass** die Schiebemit-tel (11) wenigstens einen oberen Ring aus Kugeln (12) und wenigstens einen unteren Ring aus Kugeln (13) umfasst, die sich zwischen Rollbahnen (14, 15, 16, 17) befinden, die zwischen der Montageplatte (3) und einer oberen Basis (8) der Stützstruktur (1) bzw. zwischen der Basis (8) und dem ringförmigen Element (9) befinden.

13. Stützstruktur nach Anspruch 1, **dadurch gekennzeichnet, dass** das erste Eingriffselement (22) aus einer Zahnung oder einem oder mehreren Ansätzen besteht, die unter dem ersten Abschnitt (25) bereitgestellt sind.

14. Stützstruktur nach Anspruch 1, **dadurch gekennzeichnet, dass** das geformte Element (21) aus einer gepressten Stahlplatte besteht, die einen Temper- und Glühvorgang durchlaufen hat, um die notwenige Elastizität der beiden Ab-schnitte (25, 26) sicherzustellen.

15. Stützstruktur nach Anspruch 1, **dadurch gekennzeichnet, dass** das zweite Eingriffselement (23) auf die Schiebemittel (11) wirkt, um eine Drehung des Rades (2) um die Schwenkachse (Z) zu verhindern.

## Revendications

1. Structure de support pour une roue à pivot, qui est capable de supporter de manière rotative une roue (2) autour de son axe de rotation central (X) et est dotée d'une plaque de montage (3) destinée à être fixée au corps d'une structure mobile et reliée de manière rotative à ladite structure de support (1) autour d'un axe de pivotement (Z) par le biais d'un moyen coulissant, ladite structure de support (1) comprenant un ensemble de freinage (20) qui est associé de manière mécanique et opérationnelle à ladite roue (2) et qui est capable de verrouiller la roue (2) et la plaque de montage (3) de sorte à empêcher une rotation de ladite roue (2) autour dudit axe central (X) et dudit axe de pivotement (Z), respectivement, ledit ensemble de freinage (20) comprend un élément façonné (21) qui est monté de manière pivotante sur ladite structure de support (1) tel un culbuteur autour d'un axe de rotation (Y) et est doté d'au moins un premier élément d'engagement (22) et au moins un deuxième élément d'engagement (23) qui sont capables d'être déplacés, à la suite d'un pivotement dudit élément façonné (21), entre une position opérative (18), où ils sont contraints de sorte à s'attacher respectivement à ladite roue (2) et à ladite plaque de montage (3) afin d'empêcher une rotation de ladite roue (2) respectivement autour dudit axe central (X) et dudit axe de pivotement (Z), et une position de repos (24), où ils n'interfèrent pas avec ladite roue (2) et avec ladite plaque de montage (3), **caractérisée en ce que** ledit élément façonné (21) doté d'une première portion (25) et d'une deuxième portion (26), qui sont reliées ensemble de manière continue comme une pièce au moyen d'une pliure de retour et sont agencées de sorte à être au moins en partie substantiellement l'une face à l'autre, où ladite première portion (25) et deuxième portion (26) comprennent respectivement un premier et un deuxième moyen d'actionnement (27, 28), de telle sorte que, en faisant opérer le premier moyen d'actionnement (27) de la première portion (23), ledit élément façonné (21) amène de manière forcée ledit premier élément d'engagement (22) et ledit deuxième élément d'engagement (23) dans ladite position opérative (19) et ladite deuxième portion (26) adopte une position verrouillée (19) où elle s'engage de manière retenue avec ladite structure de support (1), maintenant ledit premier élément d'engagement (22) et ledit deuxième élément d'engagement (23) de manière stable dans ladite position opérative (18), et en faisant opérer le deuxième moyen d'actionnement (28) de la deuxième portion (26), ledit élément façonné (21) amène de manière flexible ledit premier élément d'engagement (22) et ledit deuxième élément d'engagement (23) vers ladite position de repos (24) et ladite deuxième portion (26) adopte une position libérée (29), où elle est désengagée de ladite structure de support (1), maintenant ledit premier élément d'engagement (22) et ledit deuxième élément d'engagement (23) de manière stable dans ladite position de repos.

2. Structure de support selon la revendication 1, **caractérisée en ce que** ledit premier et ledit deuxième moyen d'actionnement consistent essentiellement, de manière respective, en une première section (27) de ladite première portion (25) et une deuxième section (28) de ladite deuxième portion (26) s'étendant tel des pédales d'actionnement au moins partiellement à l'extérieur des dimensions globales de ladite structure de support (1).

3. Structure de support selon la revendication 1, **caractérisée en ce que** ledit premier élément d'engagement (22) et ledit deuxième élément d'engagement (23) sont agencés sur des côtés opposés dudit élément façonné (21) par rapport à l'axe de rotation (Y) autour duquel ledit élément façonné (21) est capable de tourner sur la structure de support (1).

4. Structure de support selon la revendication 1, **caractérisée en ce que** ledit élément façonné (21) est monté de manière pivotante sur ladite structure de support (1) autour d'un axe de rotation (Y) substantiellement parallèle à l'axe central (X) de ladite roue (2).

5. Structure de support selon la revendication 1, **caractérisée en ce que** ledit élément façonné (21) est relié de manière pivotante sur ladite structure de support (1) autour d'un axe de rotation (Y) au moyen de sa première portion (25).

6. Structure de support selon la revendication 1, **caractérisée en ce que** ladite deuxième portion (26) est dotée d'un moyen de fixation (33) destiné à s'engager/se désengager avec/d'une partie profilée opposée (34) de ladite structure de support (1).

7. Structure de support selon la revendication 6, **caractérisée en ce que** ledit moyen de fixation (33) est formé au moyen d'une pliure en forme de gradin qui est capable de s'engager/se désengager avec/d'un bord correspondant de ladite partie profilée opposée (34).

8. Structure de support selon la revendication 1, **caractérisée en ce que** ladite première portion (25) et ladite deuxième portion (26) sont maintenues comprimées de manière flexible par ladite structure de support (1).

9. Structure de support selon les revendications 5, 6, **caractérisée en ce que** ladite première portion (25) et ladite deuxième portion (26) sont maintenues comprimées de manière flexible au moyen de la liaison de ladite première portion (25) à ladite structure de support (1) autour dudit axe de rotation (Y) et l'action de ladite partie profilée opposée (34) sur ladite deuxième portion (26).

10. Structure de support selon la revendication 2, **caractérisée en ce qu'**une action de compression sur la première section (27) de ladite première portion (25) provoque un abaissement de ladite première portion (25) et un soulèvement de ladite deuxième portion (26).

11. Structure de support selon la revendication 1, **caractérisée en ce que** ladite plaque de montage (3) est reliée de manière rigide à un élément annulaire (9) doté d'un bord denté (32) capable de coopérer avec ledit deuxième élément d'engagement (23).

12. Structure de support selon la revendication 11, **caractérisée en ce que** ledit moyen coulissant (11) comprend au moins un anneau supérieur de sphères (12) et au moins un anneau inférieur de sphères (13) situés entre des pistes de roulement (14, 15, 16, 17) définies respectivement entre la plaque de montage (3) et une base supérieure (8) de la structure de support (1) et entre ladite base (8) et ledit élément annulaire (9).

13. Structure de support selon la revendication 1, **caractérisée en ce que** ledit premier élément d'engagement (22) consiste en une denture ou en un ou plusieurs mentonnets fournis au-dessous de ladite première portion (25).

14. Structure de support selon la revendication 1, **caractérisée en ce que** ledit élément façonné (21) consiste en une plaque en acier pressé qui a subi des processus de revenu et de recuit afin d'assurer la flexibilité nécessaire des deux portions (25, 26).

15. Structure de support selon la revendication 1, **caractérisée en ce que** ledit deuxième élément d'engagement (23) agit sur ledit moyen coulissant (11) de sorte à empêcher une rotation de ladite roue (2) autour dudit axe de pivotement (Z).
